# EUROPEAN PATENT SPECIFICATION

(11) **EP 4 206 662 B1**
(45) Date of publication and mention of the grant of the patent: **11.11.2026**
(21) Application number: 22176041.6
(22) Date of filing: 30.05.2022
(51) Int. Cl.: G01N 23/04, G01N 23/083

(54) **SYSTEM AND METHOD FOR DETERMINING THE NUMBER OF SMALL PRODUCTS IN A PACKAGE WITH X-RAY IMAGING**
SYSTEM UND VERFAHREN ZUR BESTIMMUNG DER ANZAHL KLEINER PRODUKTE IN EINER BEUTELPACKUNG ANHAND EINES RÖNTGENBILDES
SYSTÈME ET PROCÉDÉ PERMETTANT DE DÉTERMINER LE NOMBRE DE PETITS PRODUITS DANS UN SAC DE CONDITIONNEMENT À PARTIR DE L'IMAGE À RAYONS X

(30) Priority: 04.01.2022 TR 202200080
(43) Date of publication of application: 05.07.2023
(73) Proprietor: Eti Gida Sanayi Ve Ticaret Anonim Sirketi, Eskisehir (TR)
(72) Inventor: Unlu, Mehmet, Eskisehir (TR)
(74) Representative: Sevinç, Cenk

(56) References cited:
- EP-A1- 3 048 440
- JP-A- 2012 242 289

## Description

### Technical Field of the Invention

The present invention relates to a system for determining the number of small products in the bag package from the x-ray image that enables detecting the missing quantities of small products or packages in a disorganized and random position in the bag package.

In particular, the present invention relates to the ability to sort the bag packages with missing numbers at the x-ray output by estimating the number of small packages in the bulk at random positions in three dimensions in the bag package.

### State of the Art

Today, conveyor systems that perform weighing in the product transition are used to provide the number of products inside the bag pack. The weighing process is performed as the product passes through the product transport conveyor working on the load cell called Loadcell. Depending on the fluctuation in weight of the product, missing pieces can be detected by this method.

In food production lines, there are methods developed to verify the in-pack quantity from the images obtained as the bag-packed products pass through the x-ray scanner. However, in the current x-ray image processing algorithms, the missing pieces of small products or packages that are disorganized and in random positions in the bag package cannot be detected.

The invention, which is the subject of the application numbered "JP2002214357A" in the state of the art, relates to an X-ray image inspection system and method capable of managing the quality of products according to numbers by which quality information about contamination with foreign matter and the number of contents is imparted to the products. A metal detector is used to check whether or not the products contain iron as a foreign matter. A weighing instrument measures the weight per one product. X-ray images of the products are taken and stored in an X-ray foreign matter inspection apparatus. A laser marker marks the package of the product by using a laser with a mark including data about the date of inspection or fabrication of the product.

The invention, which is the subject of the application numbered "JP2012242289A" in the state of the art, is a method for inspecting the number of products and package contents with high precision inspection in order to reduce the need for workers. Packaged products on the vertically moving band are inspected one by one by X-ray imaging, provided that they do not superimpose. In the image obtained after X-ray imaging, the number of products is determined by counting the protrusions and corners of the packaged product.

Following the preliminary survey conducted in the state of the art, the patent document numbered "EP3048440A1" provides an inspection device capable of counting the number of contained objects of a product in which objects each having a predetermined shape are contained in a package in an overlapping manner. An inspection device according to an aspect of the present invention emits light onto a product in which a plurality of objects each having a predetermined shape are contained, and inspects the number of the objects based on a transmission image obtained from light having transmitted through the product. EP3048440A1 does not provides a unique method to calculate the number of products inside the package even the products are disorganized and in random positions in the package independently of the physical properties such as the content, thickness, and size of the product by using the average value of the total grayness value of the package divided by the average grayness value of one product.

In the state of the art, there are systems that perform imaging for the package with X-ray and enable sorting the package in which the defective product is detected. In X-ray image processing algorithms, there is a need for a system that detects the missing pieces of small products or packages that are disorganized and in random positions in the bag package.

Consequently, the disadvantages disclosed above and the inadequacy of available solutions in this regard necessitated making an improvement in the relevant technical field.

### Objects of the Invention

The present invention relates to a system for determining the number of small products in the bag package from the x-ray image that enables detecting the missing quantities of small products or packages in a disorganized and random position in the bag package.

The most important object of the present invention is to detect the missing quantities of small products or packages in disorganized and random positions.

Another object of the present invention is to enable the number of products to be determined by the contrast difference of the images.

Another object of the present invention is to ensure that the products that are found to be missing products are sorted out.

### Description of the Figures

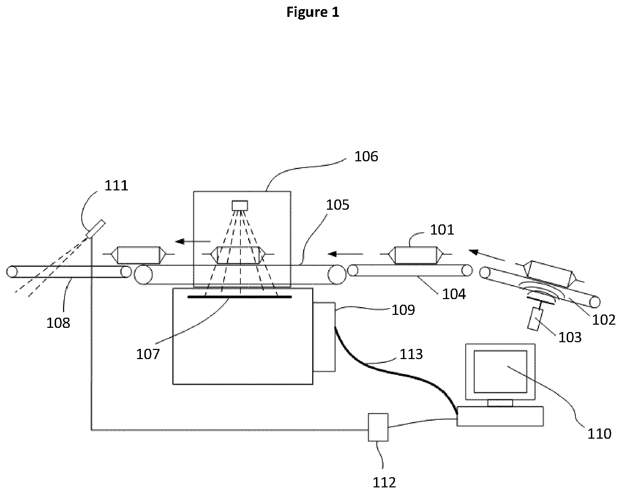

**Figure 1** illustrates a view of schematic flow diagram of the system according to the present invention.

### Reference Numerals:

**100.** System for determining quantities of small products in the bag package from the X-ray image
**101.** Bag Package
**102.** Vibrating Band
**103.** Vibration Unit
**104.** Input Conveyor
**105.** Main Conveyor
**106.** X-ray Carrier
**107.** X-ray Detector
**108.** Output Conveyor
**109.** Control Unit
**110.** Image Processing Unit
**111.** Compressed Air Valve
**112.** Input - Output Card
**113.** Ethernet Connection

### Description of the Invention

The present invention relates to a system for determining the number of small products in the bag package from the x-ray image that enables detecting the missing quantities of small products or packages in a disorganized and random position in the bag package.

The system for determining quantities of small products in the bag package from the x-ray image (100) comprises bag package (101), vibrating band (102), vibration unit (103), input conveyor (104), main conveyor (105), x-ray carrier (106), x-ray detector (107), output conveyor (108), control unit (109), image processing unit (110), compressed air valve (111), and input - output card (112).

The bag package (101) contains the disorganized, free, and tangled products.

The vibrating band (102) prevents the products in the bag package (101) from clumping together with the vibration as it passes over the bag package (101), thereby making it more discrete and visually distinguishable.

The vibration unit (103) generates vibration on the vibrating band (102) and enables its amplitude and intensity to be adjusted.

The input conveyor (104) provides the transport of the bag package (101) coming from the vibrating band (102) to the main conveyor (105).

The main conveyor (105) carries the x-ray scanner (106) and x-ray detector (107) and the control unit (109) thereon, allowing the bag package (101) to be conveyed to the output conveyor (108).

The X-ray scanner (106) provides scanning of the products in the bag package (101) moving on the main conveyor (105).

The X-ray detector (107) creates the numerical data of the rays passing through the x-ray scanner (106) according to the energy level and provides creating a two-dimensional image.

The control unit (109) receives the two-dimensional images from the x-ray sensor (107) and ensures that they are saved to the computer therein. The control unit (109) provides the transfer of the images recorded to the image processing unit (110) via the ethernet connection (113).

The image processing unit (110) enables determining the parts of the product of interest in the package in the two-dimensional images receiving from the processor and the control unit (109), by filtering. The image processing unit (110) provides the filtering of parts with pixel value between 0 and 200 (adjusted) numerically by filtering. Thus, the product regions are detected. Upper and lower limit values of filter can be adjusted by the user. The image processing unit (110) determines the product groups and their limits that are not adjacent to each other from the filtered sections. The image processing unit (110) numerically calculates the grayness values for each group. The image processing unit (110) calculates the total grayness value by summing the grayness value in each pixel. The image processing unit (110) ensures that the moving average value of the total grayness values of each package is obtained, and this average value is divided by the number of in-pack units being worked at that time in order to obtain the average grayness value per product. The moving average number is a user changeable value. By means of the moving average, the mass change and indirectly the grayness change caused by the food processing differences of the product in the currently running process are changed in an adaptive manner, thereby resulting in more accurate results. The image processing unit (110) provides the estimation of how many products each group belongs to by dividing the calculated grayness value of each group by the average grayness per product unit value. Thus, the total number of items in the package is found. In another embodiment of the present invention, the image processing unit (110) provides the estimation of how many products there are by dividing the total grayness numerical value of the package by the unit product grayness value. The resulting product estimate value is a real number. The image processing unit (110) limits the sorting limit values of the package over real values.

The output conveyor (108) enables transporting the bag package (101) coming out of the main conveyor (105).

The input output card (112) provides the commands from the image processing unit (110) to be transmitted to the compressed air valve (111).

The compressed air valve (111) ensures that the defective ones from the bag packages (101) moving on the output conveyor (108) are sorted with the help of compressed air.

In an experimental study performed on an x-ray machine, 3-layer wafer slices covered with cream were scanned individually from x-ray. The measured gram mass values of each scanned product are different. This difference is due to differences in cream amount and other non-ideal processes. The pixel area value and the total grayness value were calculated by processing the image of each product and adapted to the table.

**Table 1**

| | **GRAM** | **AREA** | **GRAY** | **GRAY/ GRAM** | **AREA / GRAM** |
|---|---|---|---|---|---|
| | | | | | |
| | 10.80 | 6403.00 | 553089.00 | 51211.94 | 592.87 |
| | 11.88 | 6693.00 | 601228.00 | 50608.42 | 563.38 |
| | 8.08 | 5985.00 | 406893.00 | 50358.04 | 740.72 |
| | 10.23 | 6216.00 | 519594.00 | 50791.20 | 607.62 |
| | 9.75 | 6224.00 | 497825.00 | 51058.97 | 638.36 |
| | | | | | |
| **AVARAGE** | 10.15 | 6304.20 | 515725.80 | 50805.72 | 628.59 |
| **STANDARD DEVIATION** | 1.40 | 263.17 | 72261.01 | 342.31 | 68.26 |
| **PERCENTAGE -STANDARD DEVIATION** | 13.82 | 4.17 | 14.01 | 0.67 | 10.86 |

In Table 1, the gray area area value (AREA), total grayness value (GRAY) and weight (GRAM) values for each product obtained from the grayscale image are given. And also (GRAY/GRAM) and (AREA/GRAM) values are also derived for analysis. With the examination, the lowest deviation value from these values is the GRAY/GRAM value. This shows that the data that is compatible with the weight (GRAM) value of the products is the total value of grayness (GRAY).

The data obtained from performing the same experiment with different products were shown in Table 2. Here, as a result, it is observed that the sum of the gray values in the sections of the product in the images obtained from x-ray gives proportional data with the total mass.

**Table 2**

| | **GRAM** | **AREA** | **GRAY** | **GRAY/GRAM** | **AREA** / **GRAM** |
|---|---|---|---|---|---|
| | 10.22 | 6237.00 | 521993.00 | 51075.64 | 610.27 |
| | 10.38 | 6443.00 | 530165.00 | 51075.63 | 620.71 |
| | 10.46 | 6354.00 | 535153.00 | 51161.85 | 607.46 |
| | 10.71 | 6437.00 | 547260.00 | 51098.04 | 601.03 |
| | 10.96 | 6450.00 | 557367.00 | 50854.65 | 588.50 |
| | 11.01 | 6495.00 | 562407.00 | 51081.47 | 589.92 |
| | 11.01 | 6392.00 | 561937.00 | 51038.78 | 580.56 |
| | 11.15 | 6571.00 | 568687.00 | 51003.32 | 589.33 |
| | 11.71 | 6742.00 | 595751.00 | 50875.41 | 575.75 |
| | 11.92 | 6638.00 | 601847.00 | 50490.52 | 556.88 |
| | 12.07 | 6641.00 | 608029.00 | 50375.23 | 550.21 |
| **AVARAGE** | 11.05 | 6490.91 | 562781.45 | 50920.96 | 588.24 |
| **STANDARD DEVIATION** | 0.59 | 139.32 | 27728.02 | 247.39 | 20.72 |
| **PERCANTAGE -STANDARD DEVIATION** | 5.36 | 2.15 | 4.93 | 0.49 | 3.52 |

A method for determining (100) the number of small product in a bag package from the X-ray image, comprises following process steps:
- passing the disorganized, free, and tangled products in the bag package (101) through the vibrating band (102) before x-ray scanning,
- transporting the bag package (101) receiving from the vibrating band (102) to the main conveyor (105) by the input conveyor (104),
- scanning the products in the bag package (101) by the x-ray scanner (106) on the main conveyor (105),
- obtaining a two-dimensional image by creating numerical data according to the energy level of the rays passing through the x-ray scanner (106) by the x-ray detector (107),
- receiving two-dimensional images from the x-ray sensor (107) by the control unit (109) and saving them to the computer therein,
- transferring the images recorded by the control unit (109) to the image processing unit (110) via the ethernet connection (113),
- determining the two-dimensional images receiving from the processor and the control unit (109) and the parts of the package containing the images of the product of interest by filtering by the image processing unit (110),
- filtering the parts with a pixel value between 0 and 200 numerically by filtering by means of the image processing unit (110),
- determining the product groups and their limits that are not adjacent to each other from the filtered sections by the image processing unit (110),
- numerically calculating the grayness values for each group by the image processing unit (110),
- calculating the total grayness value by adding the grayness value in each pixel by the image processing unit (110),
- taking the moving average value of the total grayness values of each package by the image processing unit (110), and obtaining the average grayness value per product by dividing this average value by the in-pack unit value being worked at that time,
- estimating how many products each group belongs to by dividing the grayness value calculated for each group by the average unit grayness value per product by the image processing unit (110),
- transmitting the commands from the image processing unit (110) to the compressed air valve (111) by the input output card (112),
- sorting the defective ones from the bag packages (101) moving on the output conveyor (108) that carries the bag package (101) coming out of the conveyor (105) by the compressed air valve (111) with the help of compressed air.

## Claims

1. A system (100) for determining the number of small products in the bag package from the x-ray image that enables detecting the missing quantities of small products or packages in a disorganized and random position in the bag package, **characterized in that**, it comprises;
at least one bag package (101) containing the disorganized, free, and tangled products,
at least one vibrating band (102) that prevents the products in the bag package (101) from clumping together with vibration while the bag package (101) passes over it, thereby making them more discrete and visually distinguishable,
at least one vibration unit (103) that provides the amplitude and intensity to be adjusted by producing vibration on the vibrating band (102),
at least one inlet conveyor (104) that provides the transport of the bag package (101) receiving from the vibrating belt (102) to the main conveyor (105),
at least one main conveyor (105) that includes x-ray scanner (106), x-ray detector (107), and control unit thereon, thereby ensuring the delivery of the bag package (101) to the output conveyor (108),
at least one x-ray scanner (106) that scans the products inside the bag package (101) moving on the main conveyor (105),
At least one x-ray sensor (107) that produces a two-dimensional image by generating numerical data according to the energy level of the rays passing through the x-ray detector (106),
At least one control unit (109) that takes two-dimensional images from the x-ray sensor (107) and saves them to the computer located therein,
At least one image processing unit (110) that determines the parts of the product of interest in the package in the two-dimensional images coming from the processor and the control unit (109), by filtering, that determines the product groups and their limits that are not adjacent to each other from the filtered sections, that numerically calculates the grayness values for each group, that provides the moving average value of the total grayness values of each package, and the average per product grayness value by dividing this average value by the in-pack piece value being worked at that time, and that allows estimating how many products each group belongs to by dividing the calculated grayness value of each group by the average grayness per product unit value.
at least one output conveyor (108) that ensures transporting the bag package (101) coming out of the main conveyor (105),
at least one input and output card (112) that transmits the commands coming from the image processing unit (110) to the compressed air valve (111),
at least one compressed air valve (111) that sorts the defective ones out of the bag packages (101) moving on the output conveyor (108) with the help of compressed air.

2. A method for determining (100) the number of small products in a bag package from the X-ray image, **characterized in that**, it comprises the process steps of;
- passing the disorganized, free, and tangled products in the bag package (101) through the vibrating band (102) before x-ray scanning,
- transporting the bag package (101) receiving from the vibrating band (102) to the main conveyor (105) by the input conveyor (104),
- scanning the products in the bag package (101) by the x-ray scanner (106) on the main conveyor (105),
- obtaining a two-dimensional image by creating numerical data according to the energy level of the rays passing through the x-ray scanner (106) by the x-ray detector (107),
- receiving two-dimensional images from the x-ray sensor (107) by the control unit (109) and saving them to the computer therein,
- transferring the images recorded by the control unit (109) to the image processing unit (110) via the ethernet connection (113),
- determining the two-dimensional images receiving from the processor and the control unit (109) and the parts of the package containing the images of the product of interest by filtering by the image processing unit (110),
- filtering the parts with a pixel value between 0 and 200 numerically by filtering by means of the image processing unit (110),
- determining the product groups and their limits that are not adjacent to each other from the filtered sections by the image processing unit (110),
- numerically calculating the grayness values for each group by the image processing unit (110),
- calculating the total grayness value by adding the grayness value in each pixel by the image processing unit (110),
- taking the moving average value of the total grayness values of each package by the image processing unit (110), and obtaining the average grayness value per product by dividing this average value by the in-pack unit value being worked at that time,
- estimating how many products each group belongs to by dividing the grayness value calculated for each group by the average unit grayness value per product by the image processing unit (110),
- transmitting the commands from the image processing unit (110) to the compressed air valve (111) by the input output card (112),
- sorting the defective ones from the bag packages (101) moving on the output conveyor (108) that carries the bag package (101) coming out of the conveyor (105) by the compressed air valve (111) with the help of compressed air.

3. A system (100) for determining the number of small products in the bag package from the x-ray image according to Claim 1, **characterized in that**, it comprises a control unit (109) that enables transferring the recorded images to the image processing unit (110) via ethernet connection (113).

4. A system (100) for determining the number of small products in the bag package from the x-ray image according to Claim 1, **characterized in that**, it comprises an image processing unit (110) that provides numerical filtering of parts with pixel values between 0 and 200 via filtering.

5. A system (100) for determining the number of small products in the bag package from the x-ray image according to Claim 1, **characterized in that**, it comprises an image processing unit (110) that allows estimating how many products there are by dividing the total grayness numerical value of the package by the unit product grayness value.

6. A system (100) for determining the number of small products in the bag package from the x-ray image according to Claim 1, **characterized in that**, it comprises an image processing unit (110) that limits the sorting limit values of the package over real values.

## Patentansprüche

1. Ein System (100) zur Ermittlung der Anzahl kleiner Produkte in der Beutelverpackung anhand des Röntgenbildes, das es ermöglicht, fehlende Mengen kleiner Produkte oder Verpackungen zu erkennen, die in der Beutelverpackung ungeordnet und zufällig angeordnet sind, **dadurch gekennzeichnet, dass** es Folgendes umfasst:
mindestens eine Beutelverpackung (101), die die ungeordneten, losen und verhedderten Produkte enthält,
mindestens ein Vibrationsband (102), das durch Vibration verhindert, dass die Produkte in der Beutelverpackung (101) verklumpen, während die Beutelverpackung (101) darüber läuft, wodurch sie besser voneinander getrennt und optisch unterscheidbar werden,
mindestens eine Vibrationseinheit (103), die durch Erzeugung von Vibrationen auf dem Vibrationsband (102) die einzustellende Amplitude und Intensität bereitstellt,
mindestens ein Zuführförderer (104), der den Transport der vom Vibrationsband (102) übernommenen Beutelverpackung (101) zum Hauptförderer (105) gewährleistet,
mindestens ein Hauptförderer (105), der einen Röntgenscanner (106), einen Röntgendetektor (107) sowie eine darauf angeordnete Steuereinheit umfasst, wodurch die Zuführung der Beutelverpackung (101) zum Auslaufband (108) sichergestellt wird,
mindestens einen Röntgenscanner (106), der die Produkte im Inneren der auf dem Hauptförderband (105) bewegten Beutelverpackung (101) abtastet,
mindestens einen Röntgensensor (107), der ein zweidimensionales Bild erzeugt, indem er numerische Daten entsprechend dem Energieniveau der den Röntgendetektor (106) durchdringenden Strahlen generiert,
mindestens eine Steuereinheit (109), die zweidimensionale Bilder vom Röntgensensor (107) aufnimmt und diese auf dem darin befindlichen Computer speichert,
Mindestens eine Bildverarbeitungseinheit (110), die in den vom Prozessor und der Steuereinheit (109) gelieferten zweidimensionalen Bildern durch Filterung die Teile des gesuchten Produkts in der Verpackung ermittelt, die aus den gefilterten Abschnitten die Produktgruppen und deren Grenzen bestimmt, die nicht aneinandergrenzen, die die Grauwerte für jede Gruppe numerisch berechnet, die den gleitenden Mittelwert der gesamten Grauwerte jeder Verpackung liefert, sowie den durchschnittlichen Grauwert pro Produkt, indem sie diesen Durchschnittswert durch die Anzahl der derzeit bearbeiteten Stücke in der Verpackung dividiert, und die eine Schätzung der Anzahl der Produkte pro Gruppe ermöglicht, indem sie den berechneten Grauwert jeder Gruppe durch den durchschnittlichen Grauwert pro Produkteinheit dividiert.
mindestens ein Auslaufförderband (108), das den Transport der aus dem Hauptförderband (105) kommenden Beutelverpackung (101) gewährleistet,
mindestens eine Ein- und Ausgangskarte (112), die die von der Bildverarbeitungseinheit (110) kommenden Befehle an das Druckluftventil (111) überträgt,
mindestens ein Druckluftventil (111), das die fehlerhaften Beutelverpackungen (101), die sich auf dem Auslaufförderband (108) bewegen, mithilfe von Druckluft aussortiert.

2. Verfahren (100) zur Bestimmung der Anzahl kleiner Produkte in einer Beutelverpackung anhand eines Röntgenbildes, **dadurch gekennzeichnet, dass** es die folgenden Verfahrensschritte umfasst:
- das Durchlaufen der ungeordneten, losen und verhedderten Produkte in der Beutelverpackung (101) über das Rüttelband (102) vor der Röntgenuntersuchung,
- den Transport der vom Rüttelband (102) übernommenen Beutelverpackung (101) über das Zuführband (104) zum Hauptförderband (105),
- Scannen der Produkte in der Beutelverpackung (101) durch den Röntgenscanner (106) auf dem Hauptförderband (105),
- Erstellen eines zweidimensionalen Bildes durch Erzeugung numerischer Daten entsprechend dem Energieniveau der Strahlen, die den Röntgenscanner (106) durchlaufen, mittels des Röntgendetektors (107),
- Empfangen der zweidimensionalen Bilder vom Röntgendetektor (107) durch die Steuereinheit (109) und Speichern dieser Bilder auf dem darin befindlichen Computer,
- Übertragen der von der Steuereinheit (109) aufgezeichneten Bilder an die Bildverarbeitungseinheit (110) über die Ethernet-Verbindung (113),
- Ermittlung der vom Prozessor und von der Steuereinheit (109) empfangenen zweidimensionalen Bilder sowie der Teile der Verpackung, die die Bilder des gesuchten Produkts enthalten, durch Filterung durch die Bildverarbeitungseinheit (110),
- numerisches Herausfiltern der Bereiche mit einem Pixelwert zwischen 0 und 200 mittels der Bildverarbeitungseinheit (110),
- Ermittlung der Produktgruppen und ihrer Grenzen, die nicht aneinandergrenzen, aus den gefilterten Bereichen durch die Bildverarbeitungseinheit (110),
- numerische Berechnung der Grauwerte für jede Gruppe durch die Bildverarbeitungseinheit (110),
- Berechnung des Gesamtgrauwerts durch Addition der Grauwerte in jedem Pixel durch die Bildverarbeitungseinheit (110),
- Ermittlung des gleitenden Durchschnittswerts der Gesamtgrauwerte jeder Verpackung durch die Bildverarbeitungseinheit (110) und Ermittlung des durchschnittlichen Grauwerts pro Produkt durch Division dieses Durchschnittswerts durch den zu diesem Zeitpunkt bearbeiteten Einheitswert pro Verpackung,
- Schätzen der Anzahl der Produkte, zu denen jede Gruppe gehört, durch Division des für jede Gruppe berechneten Grauwerts durch den durchschnittlichen Grauwert pro Produkt durch die Bildverarbeitungseinheit (110),
- Übertragen der Befehle von der Bildverarbeitungseinheit (110) an das Druckluftventil (111) über die Ein-/Ausgabekarte (112),
- Aussortieren der fehlerhaften Exemplare aus den Beutelverpackungen (101), die sich auf dem Auslaufförderband (108) bewegen, welches die aus dem Förderband (105) kommenden Beutelverpackungen (101) transportiert, durch das Druckluftventil (111) mit Hilfe von Druckluft.

3. System (100) zur Bestimmung der Anzahl kleiner Produkte in der Beutelverpackung anhand des Röntgenbildes gemäß Anspruch 1, **dadurch gekennzeichnet, dass** es eine Steuereinheit (109) umfasst, die die Übertragung der aufgenommenen Bilder an die Bildverarbeitungseinheit (110) über eine Ethernet-Verbindung (113) ermöglicht.

4. System (100) zur Bestimmung der Anzahl kleiner Produkte in der Beutelverpackung anhand des Röntgenbildes gemäß Anspruch 1, **dadurch gekennzeichnet, dass** es eine Bildverarbeitungseinheit (110) umfasst, die durch Filterung eine numerische Filterung von Bereichen mit Pixelwerten zwischen 0 und 200 durchführt.

5. System (100) zur Bestimmung der Anzahl kleiner Produkte in der Beutelverpackung anhand des Röntgenbildes gemäß Anspruch 1, **dadurch gekennzeichnet, dass** es eine Bildverarbeitungseinheit (110) umfasst, die es ermöglicht, die Anzahl der Produkte zu schätzen, indem der Gesamtgrauwert der Verpackung durch den Grauwert eines einzelnen Produkts dividiert wird.

6. System (100) zur Bestimmung der Anzahl kleiner Produkte in der Beutelverpackung anhand des Röntgenbildes gemäß Anspruch 1, **dadurch gekennzeichnet, dass** es eine Bildverarbeitungseinheit (110) umfasst, die die Sortiergrenzwerte der Verpackung auf reale Werte beschränkt.

## Revendications

1. Système (100) permettant de déterminer le nombre de petits produits dans un emballage en sachet à partir d'une image radiographique, permettant de détecter les quantités manquantes de petits produits ou d'emballages disposés de manière désordonnée et aléatoire dans l'emballage en sachet, **caractérisé en ce qu'**il comprend;
au moins un emballage en sachet (101) contenant les produits disposés de manière désordonnée, libres et enchevêtrés,
au moins une bande vibrante (102) qui, par vibration, empêche les produits contenus dans l'emballage en sachet (101) de s'agglomérer lorsqu'ils passent sur ladite bande vibrante (102), les rendant ainsi plus distincts les uns des autres et visuellement discernables,
au moins une unité de vibration (103) qui fournit l'amplitude et l'intensité à régler en générant des vibrations sur la bande vibrante (102),
au moins un convoyeur d'entrée (104) permettant de transporter l'emballage en sachet (101) reçu depuis la bande vibrante (102) vers le convoyeur principal (105),
au moins un convoyeur principal (105) comprenant un scanner à rayons X (106), un détecteur à rayons X (107) et une unité de commande disposés sur celui-ci, assurant ainsi l'acheminement de l'emballage en sachet (101) vers le convoyeur de sortie (108),
au moins un scanner à rayons X (106) qui balaie les produits à l'intérieur de l'emballage en sachet (101) se déplaçant sur le convoyeur principal (105),
au moins un capteur à rayons X (107) qui produit une image bidimensionnelle en générant des données numériques en fonction du niveau d'énergie des rayons traversant le détecteur à rayons X (106),
au moins une unité de commande (109) qui reçoit les images bidimensionnelles provenant du capteur à rayons X (107) et les enregistre dans l'ordinateur qui y est intégré,
au moins une unité de traitement d'image (110) qui détermine, par filtrage, les parties correspondant au produit d'intérêt dans l'emballage à partir des images bidimensionnelles provenant du processeur et de l'unité de commande (109), qui détermine, à partir des sections filtrées, les groupes de produits et leurs limites qui ne sont pas adjacents les uns aux autres, qui calcule numériquement les valeurs de niveaux de gris pour chaque groupe, qui fournit la valeur moyenne mobile des valeurs totales de niveaux de gris de chaque emballage, ainsi que la valeur moyenne du niveau de gris par produit en divisant cette valeur moyenne par la valeur du nombre de pièces dans l'emballage traitée à ce moment-là, et qui permet d'estimer à combien de produits appartient chaque groupe en divisant la valeur de niveau de gris calculée pour chaque groupe par la valeur moyenne du niveau de gris par unité de produit,
au moins un convoyeur de sortie (108) qui assure le transport de l'emballage en sachet (101) sortant du convoyeur principal (105),
au moins une carte d'entrée et de sortie (112) qui transmet les commandes provenant de l'unité de traitement d'image (110) à la vanne d'air comprimé (111),
au moins une vanne à air comprimé (111) qui, à l'aide d'air comprimé, trie les emballages défectueux parmi les paquets de sachets (101) circulant sur le convoyeur de sortie (108).

2. Procédé (100) permettant de déterminer le nombre de petits produits dans un emballage en sachet à partir d'une image radiographique, **caractérisé en ce qu'**il comprend les étapes suivantes :
- faire passer, avant le balayage aux rayons X, les produits disposés de manière désordonnée, libres et enchevêtrés contenus dans l'emballage en sachet (101) sur la bande vibrante (102),
- transporter l'emballage en sachet (101) reçu depuis la bande vibrante (102) vers le convoyeur principal (105) au moyen du convoyeur d'entrée (104),
- balayer les produits contenus dans l'emballage en sachet (101) au moyen du scanner à rayons X (106) sur le convoyeur principal (105),
- obtenir une image bidimensionnelle en générant, au moyen du détecteur à rayons X (107), des données numériques en fonction du niveau d'énergie des rayons traversant le scanner à rayons X (106),
- recevoir, au moyen de l'unité de commande (109), les images bidimensionnelles provenant du capteur à rayons X (107) et les enregistrer dans l'ordinateur qui y est intégré,
- transférer les images enregistrées par l'unité de commande (109) vers l'unité de traitement d'image (110) via la connexion Ethernet (113),
- déterminer, au moyen de l'unité de traitement d'image (110), les images bidimensionnelles reçues du processeur et de l'unité de commande (109), ainsi que, par filtrage, les parties de l'emballage contenant les images correspondant au produit d'intérêt,
- filtrer, au moyen de l'unité de traitement d'image (110), les parties présentant une valeur de pixel comprise numériquement entre 0 et 200,
- déterminer, au moyen de l'unité de traitement d'image (110), à partir des sections filtrées, les groupes de produits et leurs limites qui ne sont pas adjacents les uns aux autres,
- calculer numériquement les valeurs de niveau de gris pour chaque groupe au moyen de l'unité de traitement d'image (110),
- calculer la valeur totale de niveau de gris en additionnant la valeur de niveau de gris de chaque pixel au moyen de l'unité de traitement d'image (110),
- prendre la valeur moyenne mobile des valeurs totales de niveau de gris de chaque emballage au moyen de l'unité de traitement d'image (110), et obtenir la valeur moyenne de niveau de gris par produit en divisant cette valeur moyenne par la valeur unitaire dans l'emballage étant travaillée à ce moment-là,
- estimer à combien de produits appartient chaque groupe en divisant la valeur de niveau de gris calculée pour chaque groupe par la valeur moyenne de niveau de gris par unité de produit au moyen de l'unité de traitement d'image (110),
- transmettre les commandes provenant de l'unité de traitement d'image (110) à la vanne d'air comprimé (111) au moyen de la carte d'entrée et de sortie (112),
- trier les produits défectueux parmi les paquets de sachets (101) circulant sur le convoyeur de sortie (108) qui achemine les paquets de sachets (101) sortant du convoyeur (105) à l'aide d'air comprimé via la vanne d'air comprimé (111).

3. Système (100) permettant de déterminer le nombre de petits produits dans l'emballage en sachet à partir de l'image radiographique selon la revendication 1, **caractérisé en ce qu'**il comprend une unité de commande (109) permettant de transférer les images enregistrées vers l'unité de traitement d'image (110) via une connexion Ethernet (113).

4. Système (100) permettant de déterminer le nombre de petits produits dans l'emballage en sachet à partir de l'image radiographique selon la revendication 1, **caractérisé en ce qu'**il comprend une unité de traitement d'image (110) qui effectue un filtrage numérique des parties dont les valeurs de pixels sont comprises entre 0 et 200.

5. Système (100) permettant de déterminer le nombre de petits produits dans l'emballage en sachet à partir de l'image radiographique selon la revendication 1, **caractérisé en ce qu'**il comprend une unité de traitement d'image (110) qui permet d'estimer le nombre de produits en divisant la valeur numérique totale de la densité de l'emballage par la valeur de densité unitaire d'un produit.

6. Système (100) permettant de déterminer le nombre de petits produits dans l'emballage en sachet à partir de l'image radiographique selon la revendication 1, **caractérisé en ce qu'**il comprend une unité de traitement d'image (110) qui limite les valeurs limites de tri de l'emballage sur la base de valeurs réelles.
